Europäisches Patentamt

European Patent Office

Office européen des brevets

(19)

(11) Publication number: **0 271 318 B1**

# EUROPEAN PATENT SPECIFICATION

(12)

(45) Date of publication of patent specification: **17.07.91**  (51) Int. Cl.⁵: **F04D 15/00, B60S 1/48**

(21) Application number: **87310782.5**

(22) Date of filing: **08.12.87**

The file contains technical information submitted
after the application was filed and not included in
this specification

(54) Valve arrangement for a bi-directional rotary pump.

(30) Priority: **09.12.86 GB 8629455**

(43) Date of publication of application:
**15.06.88 Bulletin 88/24**

(45) Publication of the grant of the patent:
**17.07.91 Bulletin 91/29**

(84) Designated Contracting States:
**BE DE ES FR IT**

(56) References cited:
**EP-A- 0 128 446**
**GB-A- 817 802**

(73) Proprietor: **TRICO FOLBERTH LIMITED**
**Great West Road**
**Brentford, Middlesex TW8 9HP(GB)**

(72) Inventor: **Frimley, Charles Henry**
**25, Redford Road**
**Windsor Berkshire(GB)**

(74) Representative: **Pedder, James Cuthbert**
**J.C. Pedder & Co. 38 Norbury Cross**
**Norbury London SW16 4JQ(GB)**

Rank Xerox (UK) Business Services

## Description

This invention relates to a valve arrangement for a bi-directional rotary pump and such a pump. By the term "bi-directional pump" used in the context of the present invention is meant a rotary pump having two outlets for fluid, the output of the pump being directed to a particular outlet the other outlet being closed by a valve in dependence on its sense of rotation. A pump of this kind is disclosed in EP-A-0128446.

Such pumps are used, for example, in the automotive industry to supply washer fluid to two different jets or groups of jets in a controllable fashion. Typically, one jet or jet group is used to provide washing liquid for the front windscreen of a vehicle while the other jet or jet group is used either for the rear screen or for headlamp glasses.

According to EP-A-0128446 the two positions of the valve are not stable: if the pressure falls away the valve will move to an intermediate position.

According to a first aspect of the invention, there is provided a valve arrangement for a rotary bi-directional pump comprising a valve chamber, two substantially tangentially but oppositely arranged outlets from the pump chamber of the pump forming two inlets to the valve chamber, two outlets from the valve chamber each associated with a respective one of the inlets and a valve member in the valve chamber with an obturating part and an actuating part, the valve member being movable between a first stable position in which the obturating part closes a first of the outlets from the valve chamber and a second stable position in which the obturating part closes the second of the outlets from the valve chamber, the actuating part being subject to the pressures of the inlets to move the obturating part between the said two positions in dependence on the relative inlet pressures of the two inlets.

According to a second aspect of the invention, there is provided a rotary bi-directional pump comprising a pump chamber, a pump rotor in the pump chamber, an inlet for fluid arranged in the region of the rotor axis and two substantially tangentially but oppositely arranged outlets from the pump chamber forming two inlets to a valve arrangement including a valve chamber situated adjacent the pump chamber and having the two inlets formed by the two outlets from the pump chamber, two outlets each associated with a respective one of the inlets of the valve chamber and a valve member in the valve chamber with an obturating part and an actuating part, the valve member being movable between a first stable position in which the obturating part closes a first of the outlets from the valve chamber and a second stable position in which the obturating part closes the second of the outlets from the valve chamber, the actuating part being subject to the pressures of the inlets to move the obturating part between the said two positions in dependence on the relative inlet pressures of the two inlets.

Preferably, the valve member comprises a flap element pivoted at one end in a wall of the valve chamber. Suitably the flap element is provided with a pivot at one end and engages the opposite wall of the valve chamber with its free end. The flap element may be flexible or rigid.

The valve chamber may be generally in the shape of an isosceles triangle with the pivot for the flap element at the apex, the inlets to the chamber being in the region of the base angles and the outlets from the chamber being in the equal sides adjacent their associated inlet.

The invention will now be described in greater detail, by way of example, with reference to the drawings, in which:-

Figure 1 is a sectional view through the pump chamber and valve chamber of a pump incorporating one form of valve arrangement according to the invention and showing the valve member in a first position;

Figure 2 is a view similar to figure 1 but showing the valve member in a second position;

Figure 3 is a sectional view taken on the line III-III of figure 1, and

Figures 4 and 5 are sectional views through the pump chamber on a reduced scale as compared to figure 1 showing further forms of valve arrangement in accordance with the invention.

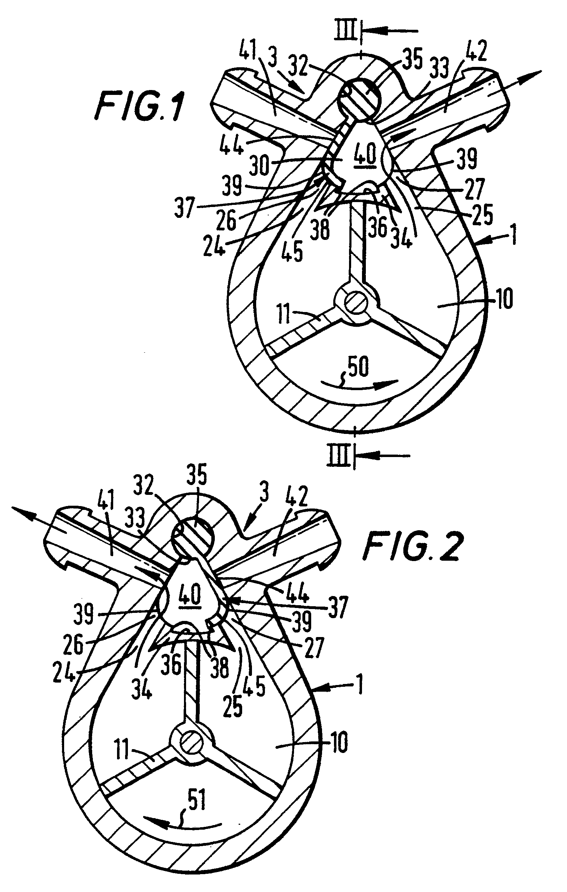

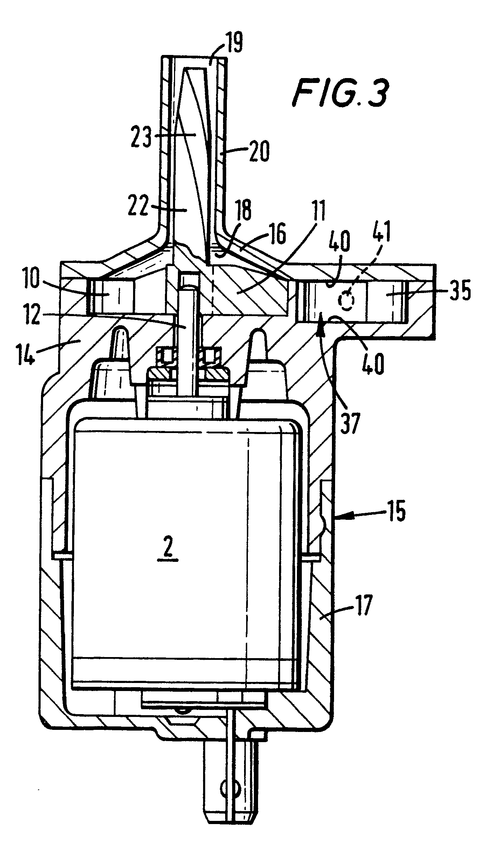

Referring firstly to figures 1 to 3, there is shown a bi-directional pump comprising a pump 1, a drive motor 2 and a valve arrangement 3.

The pump 1 comprises a circular pump working chamber 10 containing a three vaned rotor 11 mounted on a shaft 12 driven by the motor 2. Suitably the rotor 11, and indeed most of the rest of the pump and valve arrangement, are made from plastics material. The pump chamber 10 is formed in two parts, a pump casing 14 closed on its side adjacent the drive motor 2 so as to additionally form one end of the motor casing 15 and an end cover 16 closing the pump chamber 10 on its opposite side. The end cover 16 is suitably ultrasonically welded onto the pump casing 14 which in turn is suitably ultrasonically welded to or locked onto the casing 17 forming the other end of the motor casing 15.

The end cover 16 has a central aperture 18 which extends into a bore 19 in a tubular extension 20. This extension 20 provides an input for the pump, this input being assisted by an extension 22 of the rotor shaft which is formed with a helical groove formation 23.

Two tangentially arranged outlets 24 and 25 are formed in one side of the pump casing 15, these outlets 24 and 25 forming inlets 26 and 27 into the valve chamber 30 of the valve arrangement 3. The valve chamber is generally of the shape of an isosceles triangle whose base is located adjacent the pump chamber 10 with the two inlets 26 and 27 situated in the region of the base angles of the triangle. The apex of the triangle is provided with a cylindrical recess 32 having a reduced opening 33 into the valve chamber 30 and this cylindrical recess 32 receives a cylindrical pivot portion 35 of a flexible flap valve member 37, the flap protruding from the opening 33. The valve member 37 extends across the valve chamber to the base of the chamber where the free end cooperates with a base or retainer 34.

The retainer is in the form of recess 36 with two ends 38 which limit the movement of the "free" end of the valve member 37. The two side walls 40 of the valve chamber 30 are further apart than the width of the two inlets 26 and 27 to provide a curved wall 39 at these points for a purpose to be described hereafter.

The two equal sides of the isosceles triangle of the valve chamber are provided with outlets 41 and 42 extending at right angles to their respective side, each outlet being associated with the respective inlet at the adjacent base angle as will become fully apparent when the operation of the arrangement is described. As will be seen from figures 1 and 2, the valve member 37 can take up two stable positions, a first position to the left (figure 1) in which it closes the left hand outlet 41 and a second position in which it closes the right hand outlet 42 (figure 2). To this end, the valve member has an obturating portion 44 and an actuating portion 45, these portions to some extent overlapping in the embodiment shown in figures 1 to 3.

The operation of the valve arrangement as above disclosed will now be described:-
Although the operation of the valve arrangement 3 can be started from either of the stable positions (figure 1 or figure 2) of the valve member 37, for the sake of the present explanation it will be assumed that, at the start, the valve member 37 is in the position shown in figure 1 but with the pump unenergised. In this position, the obturating part 44 of the valve member 37 is closing the left hand outlet 41.

It is now assumed to be the intention to start the pump 1 to feed through the left hand outlet 41. To this end the pump motor 2 is energised to rotate the rotor 11 in the clockwise direction (as indicated by the arrow 51 in figure 2). Pressure will build up in the left hand inlet 26 and a reduced pressure will be found as a result at the right hand inlet 27. The pressure from the left hand inlet 26 will act on the actuating part 45 of the valve member 37 and push this over from its position in figure 1 to its second position in figure 2. This results in the right hand outlet 42 being closed and the left hand outlet 41 being opened. It will be observed that because of the change of direction of the flow from the left hand inlet 26 on passing to the left hand outlet 41, the flow will continue to act on the valve member 37 and keep its obturating part 44 pressed firmly against the right hand outlet 42 keeping it securely closed. The valve member 37 will also follow the curved wall portion 39 setting up the actuating part 45 for operation in the opposite sense. Once the desired delivery has been completed, the pump motor 2 is deenergised.

If it is now desired to obtain further delivery through the same outlet 41, the motor 2 is energised again in the same sense as before. On the other hand, if it is desired to change over outlets, the motor 2 is energised to run in the opposite sense (arrow 50, figure 1), thus causing the pump rotor 11 to rotate also in the opposite sense.

With this reversal, pressure will build up at the right hand inlet 27 and a reduced pressure will be present at the left hand inlet 26. This increased pressure will act on the actuating part 45 of the valve member 37 and push the valve member 37 over from the right hand outlet 42 to the left hand outlet 41, closing the left hand outlet 41 and opening the right hand outlet 42 to flow therethrough.

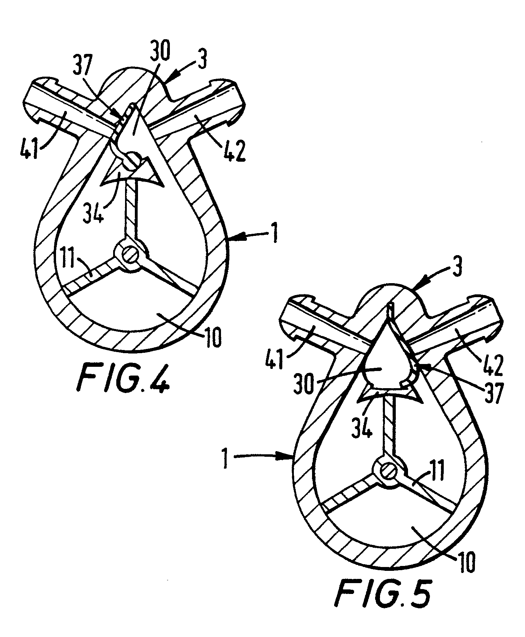

Figures 4 to 6 show diagrammatically a number of possible variations, by no means exhaustive, of different forms of valve arrangement in accordance with the invention.

Figure 4 shows an arrangement in which the valve member 37 is carried at the base of the isosceles triangle instead of at its apex.

Figure 5 shows an arrangement in which the pivotting of the flap valve member 37 is dispensed with, the valve member 37 achieving the necessary movement purely as a result of its flexibility.

It will be appreciated that various modifications may be made to the above described embodiments without departing from the scope of the invention. For example, where suitable, the various parts of the various embodiments can be interchanged as desired.

The arrangement with the one piece flap valve member could be replaced by a two part valve member, the flap and the pivot part being made from different materials. The pivot part could be made of metal with a view to cutting down on friction. Alternatively, the pivot arrangements could be produced with a relatively large clearance for the same purpose.

## Claims

1. A valve arrangement for a rotary bi-directional pump comprising a valve chamber (30), two substantially tangentially but oppositely arranged outlets (24,25) from the pump chamber (10) of the pump (1) forming two inlets (26,27) to the valve chamber (30), two outlets (41,42) from the valve chamber (30) each associated with a respective one of the inlets (26,27) and a valve member (37) in the valve chamber (30) with an obturating part (44) and an actuating part (45), characterised by the valve member (37) being movable between a first stable position in which the obturating part (44) closes a first of the outlets (41,42) from the valve chamber (30) and a second stable position in which the obturating part (44) closes the second of the outlets (41,42) from the valve chamber (30), the actuating part (45) being subject to the pressures of the inlets (26,27) to move the obturating part (44) between the said two positions in dependence on the relative inlet pressures of the two inlets (26,27).

2. A rotary bi-directional pump arrangement comprising pump chamber (10), a pump rotor (11) in the pump chamber (10), an inlet (19) for fluid arranged in the region of the rotor axis and two substantially tangentially but oppositely arranged outlets (24,25) from the pump chamber forming two inlets (26,27) to a valve arrangement (3) including a valve chamber (30) situated adjacent the pump chamber (10) and having the two inlets (26,27) formed by the two outlets (24,25) from the pump chamber (10), two outlets (41,42), each associated with a respective one of the inlets (26,27) of the valve chamber (30) and a valve member (37) in the valve chamber (30) characterised in that said valve member has an obturating part (44) and an actuating part (45), the valve member (37) being movable between a first stable position in which the obturating part (44) closes a first of the outlets (42,42) from the valve chamber (30) and a second stable position in which the obturating part (44) closes the second of the outlets (41,42) from the valve chamber (30), the actuating part (45) being subject to the pressures of the inlets (26,27) to move the obturating part (44) between the said two positions in dependence on the relative inlet pressures of the two inlets (26,27).

3. An arrangement as claimed in claim 1 or 2, characterised in that the valve member (37) comprises a flap element pivoted at one end (35) in a wall of the valve chamber (30).

4. An arrangement as claimed in claim 3, characterised in that the flap element is provided with a pivot (35) at one end and engages the opposite wall (39) of the valve chamber (30) with its free end.

5. An arrangement as claimed in claim 4, characterised in that the flap element is flexible.

6. An arrangement as claimed in claim 4, characterised in that the flap element is rigid.

7. An arrangement as claimed in claim 3, 4 or 5, characterised in that the valve chamber (30) is generally in the shape of an isosceles triangle with the pivot for the flap element (35) at the apex, the inlets (26,27) to the chamber (30) being in the region of the base angles and the outlets (41,42) from the chamber (30) being in the equal sides adjacent their associated inlet (26,27).

8. An arrangement as claimed in claim 7, characterised in that stop means (38) are provided in the base (34) of the valve chamber (30) for limiting the travel of the free end of the valve member (37).

9. An arrangement as claimed in claim 3, 4 or 5, characterised in that the valve chamber (30) is generally in the shape of an isosceles triangle with the pivot for the flap element (37) in the centre of the base, the inlets (26,27) to the chamber (30) being in the region of the base angles and the outlets (41,42) from the chamber (30) being in the equal sides adjacent their associated inlet (26,27).

**Revendications**

1. Agencement de vanne pour une pompe rotative bidirectionnelle, constitué par une chambre de vanne (30), deux sorties (24, 25) disposées sensiblement de façon tangentielle mais en regard l'une de l'autre en provenance de la chambre de pompage (10) de la pompe (1) formant deux entrées (26, 27) à destination de la chambre de vanne (30), deux sorties (41, 42) en provenance de la chambre de vanne (30) associées chacune à l'une des entrées respectives (26, 27) et un élément de vanne (37) dans la chambre de vanne (30) avec une partie d'obturation (44) et une partie d'actionnement (45), caractérisé par le fait que l'élément de vanne (37) est mobile entre une première position stable dans laquelle la partie d'obturation (44) ferme la première des ouvertures (41, 42) en provenance de la chambre de vanne (30) et une seconde position stable dans laquelle la partie d'obturation (44) ferme la seconde des ouvertures (41, 42) en provenance de la chambre de vanne (30), la partie d'actionnement (45) étant soumise aux pressions des entrées (26, 27) pour déplacer la partie d'obturation (44) entre les deux positions en fonction des pressions d'entrée relatives des deux entrées (26, 27). -

2. Agencement de pompe rotative bidirectionnelle constitué par une chambre de pompage (10), un rotor de pompe (11) dans la chambre de pompage (10), une entrée (19) pour le fluide agencé dans la zone de l'axe du rotor et deux sorties (24, 25) agencées sensiblement de façon tangentielle mais en regard l'une de l'autre en provenance de la chambre de pompage formant deux entrées (26, 27) à destination d'un agencement de vanne (3) comprenant une chambre de vanne située de façon contiguë à la chambre de pompage (10) et comportant les deux entrées (26, 27) formées par les deux sorties (24, 25) en provenance de la chambre de pompage (10), deux sorties (41, 42), associées chacune à une des entrées respectives (26, 27) de la chambre de vanne (30) et un élément de vanne (37) dans la chambre de vanne (30), caractérisé en ce que l'élément de vanne comporte une partie d'obturation (44) et une partie d'actionnement (45), l'élément de vanne (37) étant mobile entre une première position stable dans laquelle la partie d'obturation (44) ferme la première des sorties (41, 42) en provenance de la chambre de vanne (30) et une seconde position stable dans laquelle la partie d'obturation (44) ferme la seconde des sorties (41, 42) en provenance de la chambre de vanne (30), la partie d'actionnement (45) étant soumise aux pressions des entrées (26, 27) pour déplacer la partie d'obturation (44) entre les deux positions en fonction des pressions d'entrée relatives des entrées (26, 27).

3. Dispositif selon la revendication 1 ou 2, caractérisé en ce que l'élément de vanne (37) est constitué par un élément de volet mis en pivotement sur une extrémité (35) dans une paroi de la chambre de vanne (30).

4. Agencement selon la revendication 3, caractérisé en ce que l'élément de volet est muni d'un pivot (35) sur une extrémité et en ce qu'il coopère avec la paroi opposée (39) de la chambre de vanne (30) par son extrémité libre.

5. Agencement selon la revendication 4, caractérisé en ce que l'élément de volet est souple.

6. Agencement selon la revendication 4, caractérisé en ce que l'élément de volet est rigide.

7. Agencement selon la revendication 3, 4 ou 5, caractérisé en ce que l'élément de vanne (30) a de façon générale la forme d'un triangle isocèle avec le pivot de l'élément de volet (35) sur le sommet, les entrées (26, 27) à destination de la chambre (30) étant dans la zone des angles de base et les sorties (41, 42) en provenance de la chambre (30) étant sur les côtés égaux adjacents à leur entrée associée (26, 27).

8. Agencement selon la revendication 7, caractérisé en ce que des butées (38) sont prévues dans la base (34) de la chambre de vanne (30) pour limiter la course de l'extrémité libre de l'élément de vanne (37).

9. Agencement selon la revendication 3, 4 ou 5, caractérisé en ce que la chambre de vanne 30 a de façon générale la forme d'un triangle isocèle avec le pivot de l'élément de volet (37) au centre de la base, les entrées (26, 27) à destination de la chambre (30) étant dans la zone des angles de base et les sorties (41, 42) en provenance de la chambre (30) étant sur les côtés égaux adjacents à leur entrée associée (26, 27).

**Patentansprüche**

1. Ventilanordnung für eine Zweirichtungs-Rotationspumpe, die eine Ventilkammer (30), zwei im wesentlichen tangentiale, jedoch entgegengesetzt angeordnete Auslässe (24, 25) aus der Pumpenkammer (10) der Pumpe (1), die zwei Einlässe (26, 27) zur Ventilkammer (30) bilden, zwei Auslässe (41, 42) aus der ventilkammer (30), die jeweils mit einem der Einlässe (26, 27) verbunden sind, und ein Ventilteil (37) in der Ventilkammer (30) mit einem Verschlußteil (44) und einem Betätigungsteil (45) umfaßt, dadurch gekennzeichnet, daß das Ventilteil (37) zwischen einer ersten stabilen Position, in der das Verschlußteil (44) den ersten der Auslässe (41, 42) aus der Ventilkammer (30) verschließt, und einer zweiten stabilen Position beweglich ist, in der das Verschlußteil (44) den zweiten der Auslässe (41, 42) aus der Ventilkammer (30) verschließt, wobei das Betätigungsteil (45) dem Druck der Einlässe (26, 27) ausgesetzt ist, damit sich das Verschlußteil (44) in Abhängigkeit vom relativen Einlaßdruck der beiden Einlässe (26, 27) zwischen diesen beiden Positionen bewegt.

2. Zweirichtungs-Rotationspumpenanordnung, die eine Pumpenkammer (10) einen Pumpenrotor (11) in der Pumpenkammer (10), einen Einlaß (19) für das Fluid, der im Bereich der Rotorachse angeordnet ist, und zwei im wesentlichen tangentiale jedoch entgegengesetzt angeordnete Auslässe (24, 25) aus der Pumpenkammer umfaßt, die zwei Einlässe (26, 27) zu der Ventilanordnung (3) bilden, die eine Ventilkammer (30), die neben der Pumpenkammer (10) angeordnet ist,und zwei Einlässe (26, 27) aufweist, die durch die beiden Auslässe (24, 25) aus der Pumpenkammer (10) gebildet werden, zwei Auslässe (41, 42), die jeweils mit einem der Einlässe (26, 27) der Ventilkammer (30) verbunden sind, und ein Ventilteil (37) in der Ventilkammer (30) umfaßt, dadurch gekennzeichnet, daß das Ventilteil ein Verschlußteil (44) und ein Betätigungsteil (45) umfaßt, wobei das Ventilteil (37) zwischen einer ersten stabilen Position, in der das Verschlußteil (44) den ersten der Auslässe (41, 42) aus der Ventilkammer (30) verschließt, und einer zweiten stabilen Position beweglich ist, in der das Verschlußteil (44) den zweiten der Auslässe (41, 42) aus der Ventilkammer (30) verschließt, wobei das Betätigungsteil (45) dem Druck der Einlässe (26, 27) ausgesetzt ist, damit sich das Verschlußteil (44) in Abhängigkeit vom relativen Einlaßdruck der beiden Einlässe (26, 27) zwischen diesen beiden Positionen bewegt.

3. Anordnung nach Anspruch 1 oder 2, dadurch gekennzeichnet, daß das Ventilteil (37) ein Klappenelement umfaßt, das an einem Ende (35) in der Wand der Ventilkammer (30) schwenkbar ist.

4. Anordnung nach Anspruch 3, dadurch gekennzeichnet, daß das Klappenelement an einem Ende mit einem Schwenkpunkt (35) versehen ist und mit seinem freien Ende in die entgegengesetzte Wand (39) der Ventilkammer (30) eingreift.

5. Anordnung nach Anspruch 4, dadurch gekennzeichnet, daß das Klappenelement flexibel ist.

6. Anordnung nach Anspruch 4, dadurch gekennzeichnet, daß das Klappenelement starr ist.

7. Anordnung nach Anspruch 3, 4 oder 5, dadurch gekennzeichnet, daß die Ventilkammer (30) im allgemeinen die Form eines gleichschenkligen Dreiecks aufweist, wobei der Schwenkpunkt für das Klappenelement (35) am Scheitelpunkt ist, wobei die Einlässe (26, 27) zu der Kammer (30) im Bereich der Grundwinkel sind und die Auslässe (41, 42) aus der Kammer (30) in den gleichen Seiten neben ihrem damit verbundenen Einlaß (26, 27) liegen.

8. Anordnung nach Anspruch 7, dadurch gekennzeichnet, daß im Grundteil (34) der Ventilkammer (30) eine Stoppeinrichtung (38) vorgesehen ist, um die Bewegung des freien Endes des Ventilteils (37) zu begrenzen.

9. Anordnung nach Anspruch 3, 4 oder 5, dadurch gekennzeichnet, daß die Ventilkammer (30) im allgemeinen die Form eines gleichschenkligen Dreiecks hat, wobei der Schwenkpunkt für das Klappenelement (37) in der Mitte des Grundteils liegt, wobei die Einlässe (26, 27) zur Kammer (30) im Bereich der Grundwinkel sind und die Auslässe (41, 42) aus der Kammer (30) in den gleichen Seiten neben ihrem damit verbundenen Einlaß (26, 27) liegen.

FIG.1

FIG.2

FIG.3

FIG.4

FIG.5